# EUROPEAN PATENT APPLICATION

(11) **EP 4 512 223 A2**
(43) Date of publication of application: **26.02.2025**
(21) Application number: 24195187.0
(22) Date of filing: 19.08.2024
(51) Int. Cl.: A01D 34/00, A01D 34/78, A01D 69/02, B60L 15/20

(54) **WORK MACHINE**

(30) Priority: 21.08.2023 JP 2023133965; 24.07.2024 JP 2024118561
(71) Applicant: Kubota Corporation, Osaka-shi, Osaka 556-8601 (JP)
(72) Inventor: MANJI, Yasuhiro, Sakai-shi, Osaka 5900908 (JP)
(74) Representative: Cabinet Beau de Loménie

(57) **Abstract**

A work machine includes: a travel electric motor 41, 42; a drive wheel unit rotatable by the travel electric motor 41, 42; a work electric motor 43; a work device rotatable by the work electric motor 43; a vehicle speed setter for use to set a desired vehicle speed; a number-of-revolutions detector 55 configured to detect a number of revolutions of the work device; a number-of-revolutions change behavior calculator 58 configured to calculate change behavior of the number of revolutions over time; a vehicle speed controller 59 configured to generate a vehicle speed control signal based on the desired vehicle speed and the change behavior; and a travel motor controller 52 configured to drive the travel electric motor 41, 42 based on the vehicle speed control signal.

## Description

### Technical Field

The present invention relates to a work machine configured to perform work while traveling and including a drive wheel unit rotatable by a travel electric motor and a work device rotatable by a work electric motor.

### Background Art

Patent Literature 1 discloses a work machine as mentioned above, which is configured to change the number of revolutions of blades (which is an type of work speed) in accordance with a change in the speed of the blades relative to the ground surface.

Patent Literature 2 discloses a mower configured to rotate blades while traveling for mowing work. The mower is configured to change its adjustable maximum speed for deceleration to reduce the load of rotation on the blades in response to the blade rotation speed (which is a type of work speed) being decreased due to an increase in the load while the mower is mowing grass at the maximum vehicle speed. This is intended to avoid a disadvantage resulting from a decrease in the blade rotation speed.

### Citation List

### Patent Literature

Patent Literature 1
   Japanese Unexamined Patent Application Publication, Tokukai, No. 2015-136305
Patent Literature 2
   Japanese Unexamined Patent Application Publication, Tokukai, No. 2018-196354

### Summary of Invention

### Technical Problem

Patent Literatures 1 and 2 each disclose lowering the vehicle speed in response to a decrease in the work speed. Work machines, however, have a work state that may change instantaneously. Changing the vehicle speed in response to each work speed change detected may not result in good work. Further, a frequent vehicle speed change discomforts the driver.

The above circumstances have led to a demand for a work machine capable of controlling its vehicle speed appropriately while performing work in an instantaneously changeable state.

### Solution to Problem

A work machine according to the present invention is a work machine configured to perform work while traveling, the work machine including: a travel electric motor; a drive wheel unit rotatable by the travel electric motor; a work electric motor; a work device rotatable by the work electric motor; a vehicle speed setter for use to set a desired vehicle speed; a number-of-revolutions detector configured to detect a number of revolutions of the work device; a number-of-revolutions change behavior calculator configured to calculate change behavior of the number of revolutions over time; a vehicle speed controller configured to generate a vehicle speed control signal based on the desired vehicle speed and the change behavior; and a travel motor controller configured to drive the travel electric motor based on the vehicle speed control signal.

With the above configuration, the number-of-revolutions change behavior calculator calculates change behavior over time of the detected number of revolutions of the work device in response to the work speed of the work device being decreased due to a load on the work electric motor. The vehicle speed controller generates a vehicle speed control signal on the basis of a desired vehicle speed set with use of the vehicle speed setter and the change behavior that the number-of-revolutions change behavior calculator has calculated. The vehicle speed control signal is based on change behavior over time of the number of revolutions of the work device. This allows the vehicle speed controller to control the vehicle speed appropriately even when the work machine is performing work in an instantaneously changeable state. The appropriate vehicle speed control means increasing or decreasing the vehicle speed not simply in proportion to an increase or decrease in the number of revolutions of the work device, but in synchronization with a change over time in the number of revolutions.

The work machine may further include: an actual vehicle speed calculator configured to calculate an actual vehicle speed of the work machine, wherein the vehicle speed control signal is based on the desired vehicle speed, the change behavior, and the actual vehicle speed. This configuration allows the vehicle speed controller to generate a vehicle speed control signal for a vehicle speed change on the basis of the desired vehicle speed and the change behavior as well as the actual vehicle speed, thereby allowing more appropriate vehicle speed control.

The work machine may be further configured such that the number-of-revolutions change behavior calculator determines sharp change behavior indicative of a first rate of change in the number of revolutions and gentle change behavior indicative of a second rate of change in the number of revolutions which second rate is lower than the first rate, and the vehicle speed control signal causes the work machine to change a vehicle speed differently for the sharp change behavior and the gentle change behavior. This configuration allows the vehicle speed controller to change the vehicle speed in accordance with whether the change behavior is (i) sharp change behavior indicative of a high rate of change in the number of revolutions of the work device or (ii) gentle change behavior indicative of a low rate of change in the number of revolutions. The work machine may be further configured such that the vehicle speed control signal causes the work machine to change a vehicle speed at a rate for each of the sharp change behavior and the gentle change behavior independently of each other. The vehicle speed controller, for example, changes the vehicle speed (that is, decelerates the work machine) at the rate of change over time indicated by sharp change behavior for rapid recovery from a sharp decrease in the number of revolutions of the work device due to, for example, a sharp increase in the work load. This reduces the work load and increases the number of revolutions back to its original.

The vehicle speed controller may alternatively control the vehicle speed for sharp change behavior and gentle change behavior in the same manner. The vehicle speed controller may, for instance, change the vehicle speed gently in accordance with change behavior of the number of revolutions of the work device for either sharp change behavior or gentle change behavior. This prevents a sharp vehicle speed change, which discomforts the driver.

The number-of-revolutions change behavior calculator may determine sharp change behavior and gentle change behavior about the number of revolutions of the work device on the basis of any of various factors such as:
(1) The rate of change in the number of revolutions for a predetermined time period.
(2) The integrated value of rates of change in the number of revolutions determined over time for respective unit time periods.
(3) The amount of shift of a frequency spectrum or frequency component distribution and the shape of the curve of the frequency spectrum, the frequency spectrum or frequency component distribution resulting from analyzing for a predetermined time period the frequency of a waveform signal as a detection signal indicative of the number of revolutions. The frequency spectrum is shifted greatly on the low (or high) frequency side for a sharp decrease (or increase) in the number of revolutions. The frequency component distribution is shifted slightly on the low (or high) frequency side for a gentle decrease (or increase) in the number of revolutions. The vehicle speed controller may also change the vehicle speed for sharp change behavior and gentle change behavior through electronic control of generating a vehicle speed control signal on the basis of a frequency spectrum curve as an input parameter for vehicle speed control.

If the work machine is traveling unmanned, the vehicle speed controller does not need to try to prevent an inappropriate vehicle speed change that discomforts the driver. The work machine may thus be further configured such that the work machine has an unmanned autonomous driving mode for unmanned work travel, the number-of-revolutions change behavior calculator determines sharp change behavior indicative of a first rate of change in the number of revolutions and gentle change behavior indicative of a second rate of change in the number of revolutions which second rate is lower than the first rate, and with the work machine in the unmanned autonomous driving mode, the vehicle speed control signal causes the work machine to change a vehicle speed sharply for the sharp change behavior and gently for the gentle change behavior.

The work machine may be configured to, if a driver or occupant is on the work machine, accelerate (or increase the vehicle speed) and decelerate (or decrease the vehicle speed) in different manners. The work machine may be preferably configured to, for instance, increase the vehicle speed gently so as not to discomfort the driver or occupant and decrease the vehicle speed sharply for a potential emergency escape. The work machine may thus be further configured in an embodiment such that the vehicle speed controller discriminates between an acceleration relation for acceleration and a deceleration relation for deceleration each as a vehicle speed control relation between (i) the desired vehicle speed and the change behavior each as an input parameter and (ii) the vehicle speed control signal as an output parameter. The work machine may preferably be further configured in a specific embodiment such that the acceleration relation and the deceleration relation are each adjustable independently of each other.

The work machine is configured to change the vehicle speed in accordance with a change in the number of revolutions of the work device as described above. This configuration may be adopted suitably for a mower including a rotary blade because its work electric motor tends to suffer from a load increase due to entanglement of cut grass. The work machine may thus be further configured in a preferred embodiment such that the work device is a mower including a rotary blade.

### Brief Description of Drawings

Fig. 1 is a side view of an electric mower in its entirety as an example electric work vehicle.
Fig. 2 is a plan view of an electric mower in its entirety.
Fig. 3 is a diagram schematically illustrating the motive power system and control system of an electric mower.
Fig. 4 is a functional block diagram illustrating control function sections of a control unit.
Fig. 5 is a diagram schematically illustrating a flow of how a control system controls the vehicle speed and the work rotation speed.
Fig. 6 is a diagram schematically illustrating a hardware-based electronic circuit as a specific example of a vehicle speed control unit.
Fig. 7 is a flowchart schematically illustrating vehicle speed control.
Fig. 8 is a functional block diagram illustrating an alternative manner of vehicle speed control based on the work rotation speed.
Fig. 9 is a time diagram illustrating how to control the vehicle speed in response to a decrease in the number of revolutions of the mower motor while the electric mower is traveling with a person thereon.
Fig. 10 is a diagram schematically illustrating map-based vehicle speed control.

### Description of Embodiments

Unless otherwise stated, the present specification uses (i) the word "forward" to refer to the front side in the front-back direction (traveling direction) of the body, (ii) the word "backward" to refer to the back side in the front-back direction of the body, (iii) the terms "left-right direction" and "lateral direction" to refer to the transverse direction (width direction) of the body, which is orthogonal to the front-back direction of the body, and (iv) the words "upward" and "downward" to refer to a position in the vertical direction of the body, that is, a height from the ground. The drawings show "F" to indicate "forward", "B" to indicate "backward", "L" to indicate "left", "R" to indicate "right", "U" to indicate "upward", and "D" to indicate "downward".

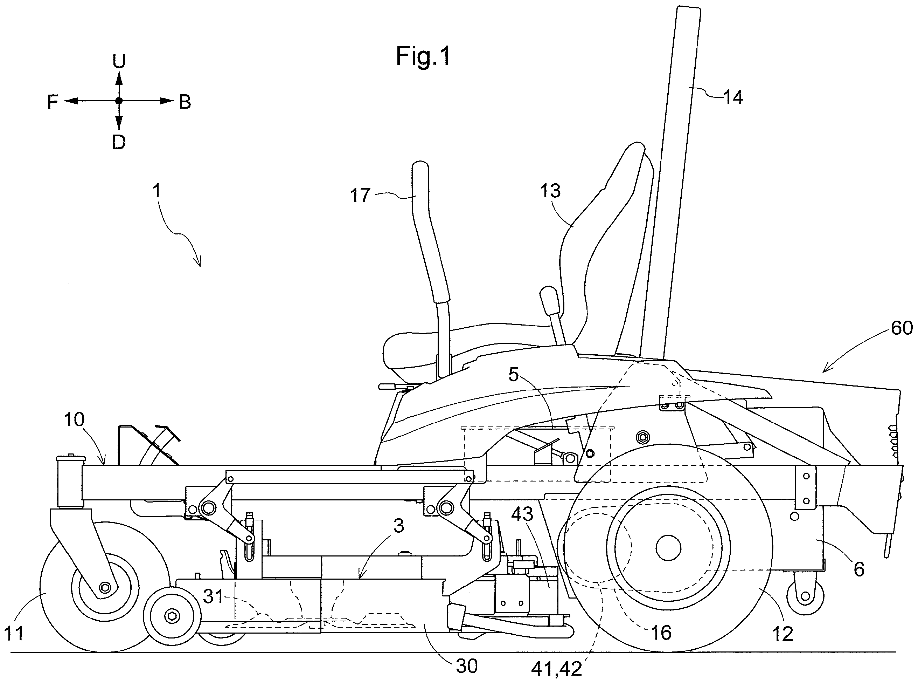

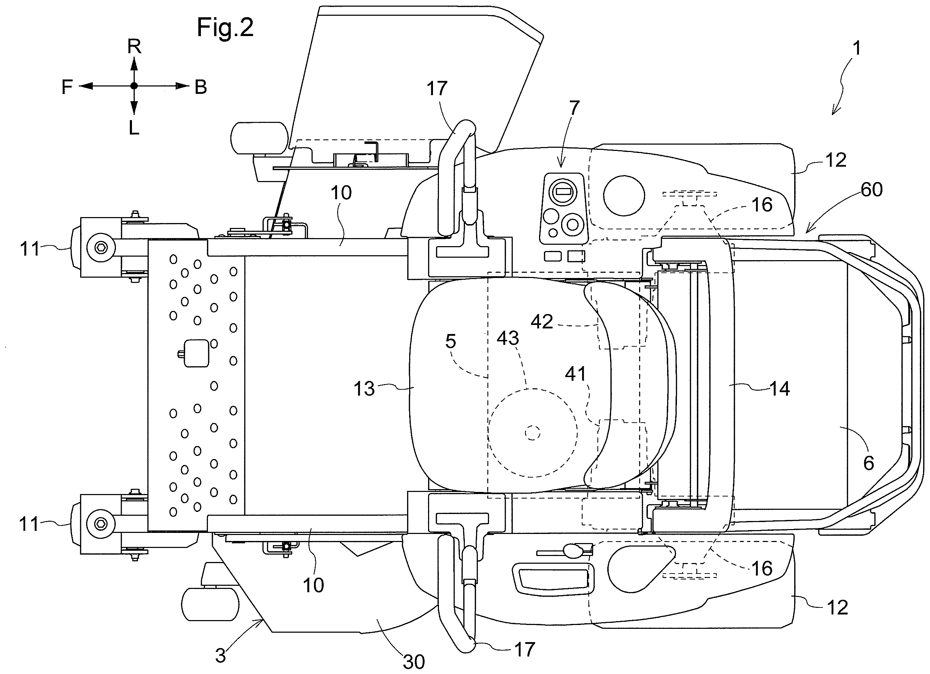

The description below deals with an electric work vehicle in the form of an electric mower as an embodiment of the present invention. The electric mower, as illustrated in Figs. 1 and 2, includes a body 1, a pair of left and right front wheels 11, a pair of left and right rear wheels 12, and a mower device 3. The front wheels 11 are held by a front portion of the body 1. The rear wheels 12 (which is an example of the "drive wheel unit") are held by a back portion of the body 1. The mower device 3 (which is an example of the "work device") is held by a lower portion of the body 1 between the front wheels 11 and the rear wheels 12. The electric mower also includes a battery 6 and a battery container 60 disposed between the left and right rear wheels 12 and containing the battery 6. The body 1 is also provided with components such as a driver's seat 13 and a roll-over protective structure (ROPS) frame 14.

The body 1 includes a frame 10 including a pair of left and right longitudinal beams extending in the front-back direction and a cross beam coupling the two longitudinal beams to each other. The ROPS frame 14 has lower ends coupled to the frame 10.

The front wheels 11 are caster wheels, whereas the rear wheels 12 are drive wheels. The electric mower includes a left travel motor 41 and a right travel motor 42 (each of which is an example of the "travel electric motor" or a travel motor). The left and right travel motors 41 and 42 are disposed inward of the respective rear wheels 12 and configured to transmit motive power to the respective rear wheels 12 through respective deceleration mechanisms 16 to drive the respective rear wheels 12 independently of each other.

The electric mower includes an instrument panel 7 to the right of the driver's seat 13. The electric mower includes a pair of left and right shift levers 17 (each of which is an example of the "vehicle speed setter") on respective opposite sides of the driver's seat 13 for use to set a desired vehicle speed. Moving the right shift lever 17 to the neutral position causes the right travel motor 42 to stop. Moving the right shift lever 17 to the forward travel side causes the right travel motor 42 to rotate to the forward travel side. Moving the right shift lever 17 to the backward travel side causes the right travel motor 42 to rotate to the backward travel side. Moving the left shift lever 17 to the neutral position, the forward travel side, or the backward travel side causes the left travel motor 41 to operate similarly to the right travel motor 42. Moving the right and left shift levers 17 drives the right and left rear wheels 12 independently of each other to the forward or backward travel side, so that the electric mower moves forward or backward or turns to the right or left.

As illustrated in Fig. 1, the mower device 3 (which is an example of the "implement") includes a mower deck 30 and two blades 31 each disposed inside the mower deck 30 and held by the mower deck 30 in such a manner as to be rotatable about a vertical axis. The electric mower includes a mower motor 43 (which is an example of the "work electric motor") configured to drive the blades 31 (which is an example of the "rotary blade") to rotate and a link mechanism 34 suspending the mower deck 30 from the frame 10 in such a manner that the mower deck 30 is capable of being lifted and lowered.

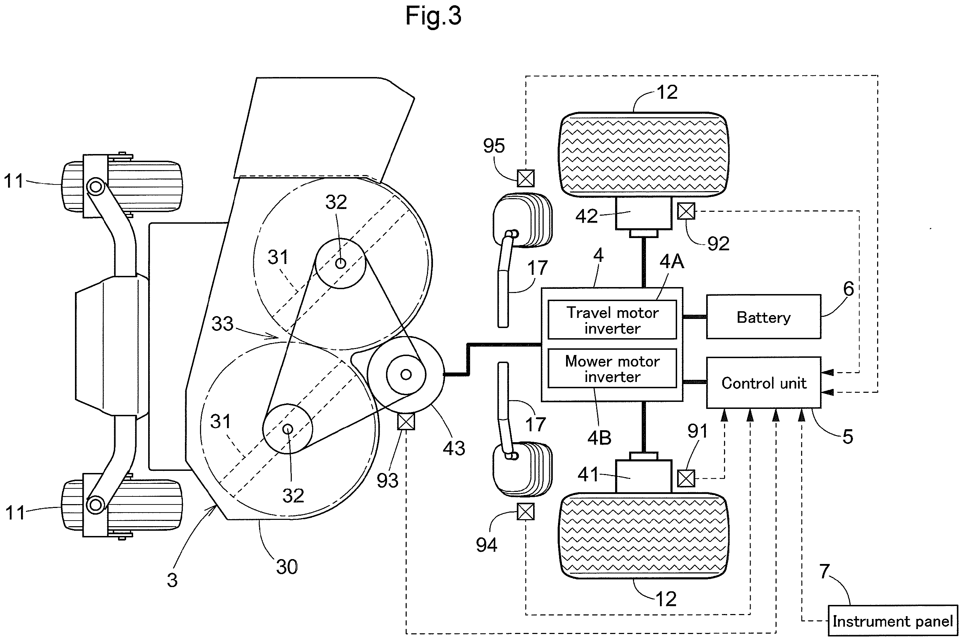

Fig. 3 illustrates the power motive system and control system of the electric mower. The mower motor 43 is disposed on a back wall of the mower deck 30, and configured to rotate, with use of a belt-based power transmission mechanism 33, two rotary shafts 32 to which the respective blades 31 are attached. The left travel motor 41 (which is an example of the "travel electric motor") is configured to rotate the left rear wheel 12, whereas the right travel motor 42 (which is an example of the "travel electric motor") is configured to rotate the right rear wheel 12.

The electric mower includes an inverter unit 4 and a control unit 5. The inverter unit 4 is configured to feed electric power to the left and right travel motors 41 and 42 and the mower motor 43. The inverter unit 4 includes an inverter 4A configured to feed electric power to the left and right travel motors 41 and 42 and an inverter 4B configured to feed electric power to the mower motor 43. The inverter unit 4 is drivable on the basis of a control signal from the control unit 5. The inverter unit 4 is connected to the battery 6 as an electric power source.

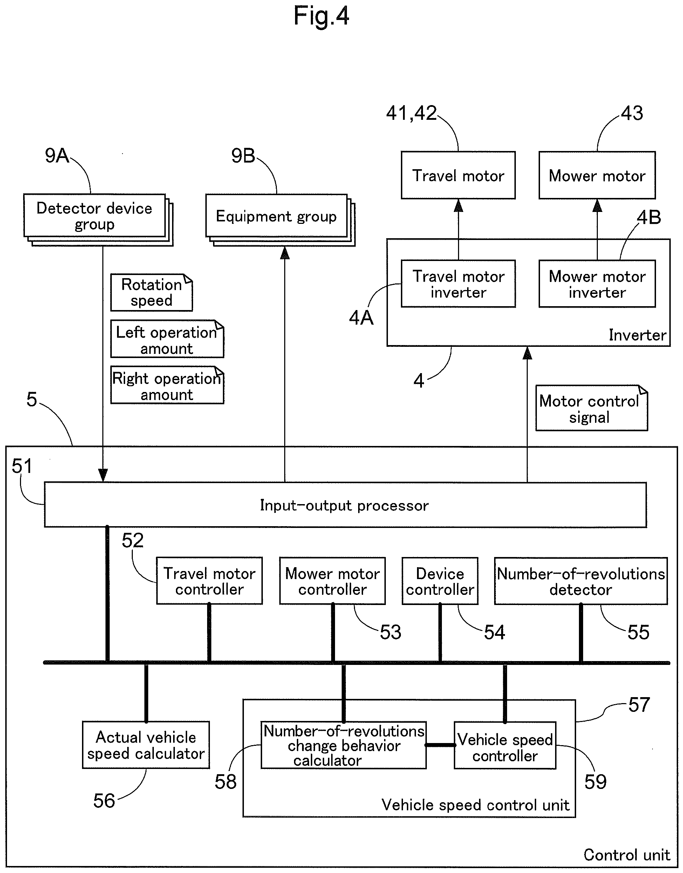

As illustrated in Fig. 4, the control unit 5 includes the following control function sections: an input-output processor 51, a travel motor controller 52, a mower motor controller 53, a device controller 54, a number-of-revolutions detector 55, an actual vehicle speed calculator 56, and a vehicle speed control unit 57.

The input-output processor 51 is connected to a detector device group 9A, an equipment group 9B, and the inverter unit 4.

The detector device group 9A includes sensors (such as potentiometers) illustrated in Fig. 3 such as a left travel motor sensor 91 configured to detect the rotation speed of the left travel motor 41, a right travel motor sensor 92 configured to detect the rotation speed of the right travel motor 42, a mower motor sensor 93 configured to detect the rotation speed of the mower motor 43, a left shift sensor 94 configured to detect the amount of operation of the left shift lever 17, and a right shift sensor 95 configured to detect the amount of operation of the right shift lever 17. The equipment group 9B includes an instrument panel 7, lights, and a buzzer.

The detector device group 9A transmits to the control unit 5 sensor signals related to vehicle speed control, the sensor signals indicating the number of revolutions of the blades 31 (that is, the number of revolutions of the mower motor 43) and the respective amounts of operation of the left and right shift levers 17.

The travel motor controller 52 is configured to generate a motor control signal on the basis of a vehicle speed control signal from the vehicle speed control unit 57 and drive the inverter 4 to control how the left and right travel motors 41 and 42 are driven independently of each other.

The mower motor controller 53 serves as a work motor controller configured to generate a motor control signal on the basis of a default number of work revolutions and drive the inverter 4 to control how the mower motor 43 is driven. The electric mower may include a member for setting a number of work revolutions, in which case the mower motor controller 53 controls how the mower motor 43 is driven on the basis of the number of work revolutions set with use of the above member.

The device controller 54 is configured to not only manage how the equipment group 9B operate, but also convert, into notification signals, various items of information of which the driver should be notified and transmit the notification signals to notification devices such as a buzzer and a loudspeaker to drive the notification devices.

The number-of-revolutions detector 55 is configured to detect the work speed on the basis of a number-of-revolutions sensor signal from the mower motor sensor 93 (which is configured to detect the number of revolutions of the mower motor 43 corresponding to the number of revolutions of the blades 31).

The actual vehicle speed calculator 56 is configured to calculate the traveling speed of the electric mower (that is, its actual vehicle speed) on the basis of (i) a sensor signal indicative of the rotation speed of the left travel motor 41 detected by the left travel motor sensor 91 included in the detector device group 9A and (ii) a sensor signal indicative of the rotation speed of the right travel motor 42 detected by the right travel motor sensor 92 included in the detector device group 9A.

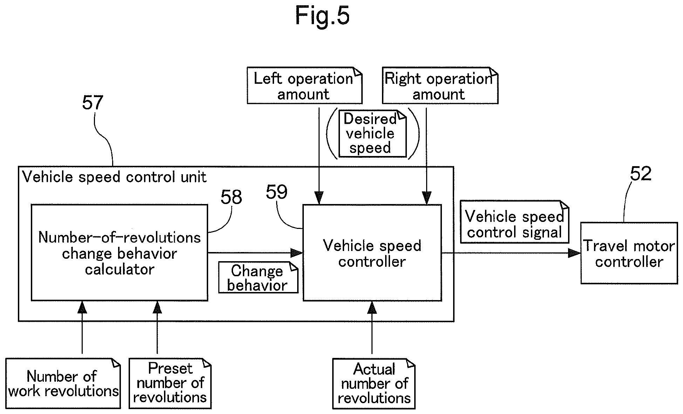

The vehicle speed control unit 57 is configured to control how the left and right travel motors 41 and 42 are driven, on the basis of the respective amounts of operation of the left and right shift levers 17 as well as change behavior over time of the number of revolutions of the mower motor 43 (which is an example of the "number of revolutions of the work device"). The vehicle speed control unit 57 thus includes a number-of-revolutions change behavior calculator 58 and a vehicle speed controller 59 as illustrated in Fig. 5.

The number-of-revolutions change behavior calculator 58 is configured to receive information on the actual number of revolutions of the blades 31 (that is, the number of work revolutions) as detected by the number-of-revolutions detector 55 and a preset number of revolutions as a control target number of revolutions. The number-of-revolutions change behavior calculator 58 has the function of calculating change behavior over time of the number of revolutions (that is, the actual number of revolutions), and provides the vehicle speed controller 59 with, as a parameter for a vehicle speed change, information on the deviation of the number of revolutions over time (that is, change behavior) derived from the change behavior of the number of revolutions over time from the preset number of revolutions. The number-of-revolutions change behavior calculator 58 is also configured to determine sharp change behavior indicative of a sharp change in the number of revolutions and gentle change behavior indicative of a gentle change in the number of revolutions and provide the vehicle speed controller 59 with a change behavior state signal indicative of whether the current change behavior is sharp change behavior or gentle change behavior as well as whether the electric mower is accelerating (that is, positive change rate behavior) or decelerating (that is, negative change rate behavior).

The vehicle speed controller 59 is configured to generate a vehicle speed control signal (which is an example of the "output parameter") to be provided for the travel motor controller 52 on the basis of the respective amounts of operation of the left and right shift levers 17, a desired vehicle speed (which is an example of the "input parameter") determined eventually on the basis of the amounts of operation, and the change behavior (which is an example of the "input parameter") that the number-of-revolutions change behavior calculator 58 has calculated. The present embodiment is configured such that the vehicle speed controller 59 receives information on the actual vehicle speed that the actual vehicle speed calculator 56 has calculated and generates a vehicle speed control signal indicative of a vehicle speed change rate calculated from the desired vehicle speed, the change behavior, and the actual vehicle speed. The vehicle speed controller 59 uses information on the actual vehicle speed as a vehicle speed change parameter to generate a vehicle speed control signal based on the degree of acceleration or deceleration (that is, the vehicle speed change rate).

The vehicle speed control unit 57 is configured to, in response to the number of revolutions of the blades 31 being decreased as a result of, for instance, the electric mower entering an area with dense grass, change the vehicle speed in the different modes described below for recovery from the decrease in the number of revolutions. The vehicle speed control unit 57 may be configured to select one or more of the modes (a) to (f).
(a) The vehicle speed control unit 57 outputs a vehicle speed control signal for causing the electric mower to change its vehicle speed differently depending on whether the change behavior is sharp change behavior or gentle change behavior.
(b) The vehicle speed control unit 57 outputs a vehicle speed control signal for causing the electric mower to change its vehicle speed gently regardless of whether the change behavior is sharp change behavior or gentle change behavior.
(c) If the electric mower has an unmanned autonomous driving mode for unmanned work travel, the vehicle speed control unit 57, while the electric mower is traveling autonomously, outputs a vehicle speed control signal for causing the electric mower to change its vehicle speed sharply in response to sharp change behavior and a vehicle speed control signal for causing the electric mower to change its vehicle speed gently in response to gentle change behavior.
(d) If the electric mower has an unmanned autonomous driving mode for unmanned work travel, the number-of-revolutions change behavior calculator 58 remains off, so that the vehicle speed control unit 57 outputs a vehicle speed control signal not based on the number-of-revolutions change behavior.
(e) The vehicle speed control unit 57 determines on the basis of the state of a driving mode selection switch included in the detector device group 9A whether the electric mower is in an unmanned autonomous driving mode, a manned autonomous driving mode, or a manual driving mode. This allows the driver or manager to operate the driving mode selection switch to select one of the three modes. This function of the driving mode selection switch may be replaced with a remote control function of the electric mower or a function of a software application on a mobile communication device held by the driver or manager. The vehicle speed control unit 57, in the unmanned autonomous driving mode, controls the vehicle speed not in such a manner as to avoid a vehicle speed change that discomforts the driver, and in the manned autonomous driving mode, controls the vehicle speed in the above manner. The vehicle speed control unit 57 may be configured to, in the manual driving mode as well, control the vehicle speed in the above manner.
(f) The vehicle speed control unit 57 uses an acceleration relation for acceleration and a deceleration relation for deceleration each as a vehicle speed control relation between the input parameters, that is, the desired vehicle speed and the change behavior, and the output parameter, that is, the vehicle speed control signal. The vehicle speed control unit 57 outputs a vehicle speed control signal based on the acceleration relation if the change behavior indicates that the electric mower is accelerating and a vehicle speed control signal based on the deceleration relation if the change behavior indicates that the electric mower is decelerating. The acceleration and deceleration relations are adjustable independently of each other.

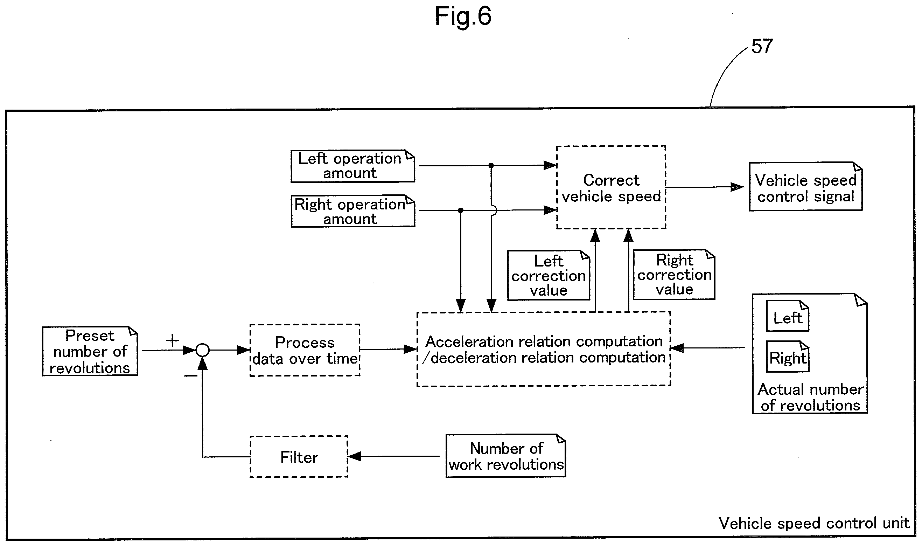

The vehicle speed control unit 57 is described above in an abstract manner for an illustrative purpose, and is practically embodied as a hardware-based or software-based electronic circuit as illustrated in Fig. 6. The vehicle speed control unit 57 operates as described above regardless of whether it is a hardware-based or software-based electronic circuit. Fig. 6, for example, shows "Process data over time" in correspondence with the function of the number-of-revolutions change behavior calculator 58, "Acceleration relation computation/deceleration relation computation" in correspondence with the function in item (f) above, and "Correct vehicle speed" in correspondence with the function of the vehicle speed controller 59.

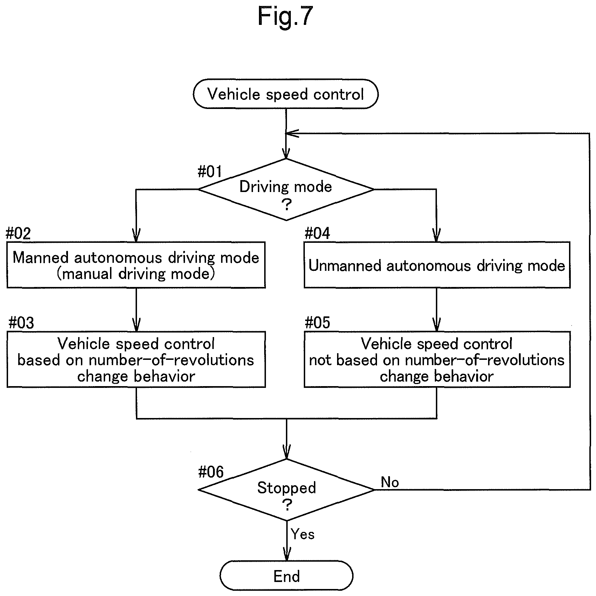

The electric mower is capable of autonomous driving in the unmanned autonomous driving mode and the manned autonomous driving mode. The vehicle speed control unit 57 controls the vehicle speed differently for the two autonomous driving modes. Fig. 7 is a flowchart illustrating how the vehicle speed control unit 57 controls the vehicle speed differently depending on the autonomous driving mode. This vehicle speed control routine starts with the vehicle speed control unit 57 determining on the basis of the state of the driving mode selection switch whether the electric mower is in the unmanned autonomous driving mode or the manned autonomous driving mode (#01).

If the vehicle speed control unit 57 has determined that the electric mower is in the manned autonomous driving mode (#02), that is, if a driver is on the driver's seat 13, the vehicle speed control unit 57 controls the vehicle speed on the basis of number-of-revolutions change behavior to prevent the vehicle speed from changing sharply as a result of a sharp change in the number of revolutions of the mower motor (#03). If the vehicle speed control unit 57 has determined that the electric mower is in the unmanned autonomous driving mode (#04), that is, if no person is on the driver's seat 13, the vehicle speed control unit 57 controls the vehicle speed not on the basis of number-of-revolutions change behavior (#05). The vehicle speed control unit 57, in either case, continues its vehicle speed control as above until the electric mower is stopped (No in #06), and ends the routine in response to the electric mower being stopped (Yes in #06).

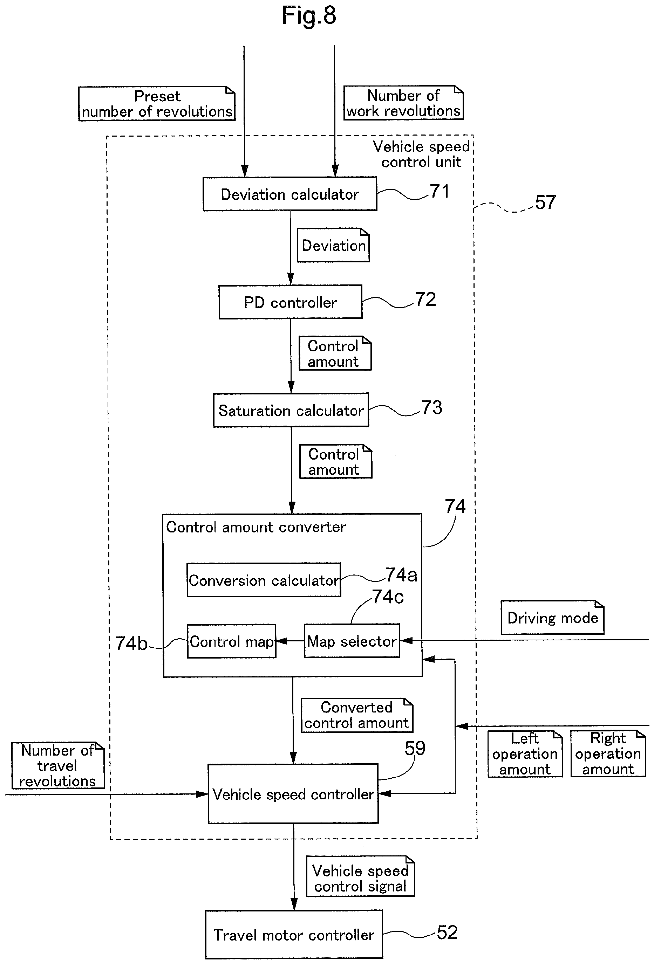

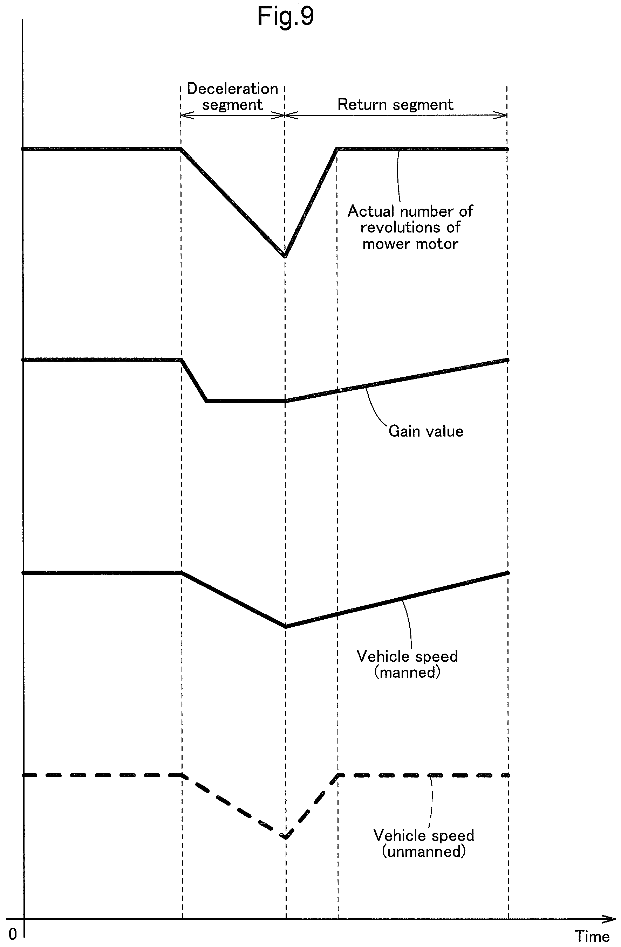

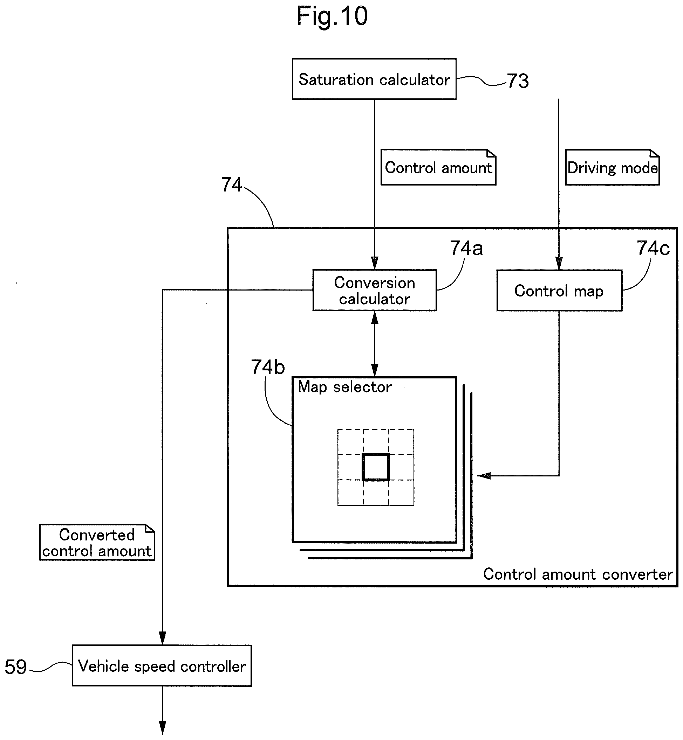

The description below deals in greater detail with how the vehicle speed control unit 57 controls the vehicle speed in the unmanned autonomous driving mode and the manned autonomous driving mode, with reference to Figs. 8 to 10. Fig. 8 is a functional block diagram illustrating functional sections for vehicle speed control that the vehicle speed control unit 57 includes in the form of either or both of hardware and software. Fig. 9 is a time diagram illustrating how to control the vehicle speed in response to a decrease in the number of revolutions of the mower motor while the electric mower is traveling with a person thereon. Fig. 10 is a diagram schematically illustrating map-based vehicle speed control.

As illustrated in Fig. 8, the vehicle speed control unit 57 includes a deviation calculator 71, a proportional-differential (PD) controller 72, a saturation calculator 73, and a control amount converter 74. The deviation calculator 71 is configured to receive information on (i) a preset number of revolutions (that is, a target number of revolutions) of the mower motor 43 and (ii) the actual number of work revolutions (that is, the actual number of revolutions of the mower motor), calculate the difference between the two, and transmit information on the difference as a deviation to the PD controller 72. The PD controller 72 is configured to receive the information on the deviation and transmit information on a control amount based on the deviation to the saturation calculator 73. The saturation calculator 73 is configured to receive the information on the control amount, perform a saturation calculation on the control amount, and transmit the calculation result in the form of a control amount to the control amount converter 74.

The control amount converter 74 cooperates with the vehicle speed controller 59 to, if the electric mower is in the unmanned autonomous driving mode, change the vehicle speed sharply in response to sharp change behavior of the number of revolutions of the mower motor for reduction in the load on the mower motor, and if the electric mower is in the manned autonomous driving mode (that is, a person is on the electric mower), change the vehicle speed gently in response to sharp change behavior of the number of revolutions of the mower motor for reduction in the load on the mower motor.

The control amount converter 74 for the present embodiment includes a conversion calculator 74a, control maps 74b, and a map selector 74c. The conversion calculator 74a is configured to convert the control amount from the saturation calculator 73 into a converted control amount with use of a control map 74b. The control maps 74b each serve to receive a map input value from the conversion calculator 74a, derive a map output value from the map input value, and returns the map output value to the conversion calculator 74a. The conversion calculator 74a calculates a converted control amount from the map output value and transmits information on the converted control amount to the vehicle speed controller 59. The vehicle speed controller 59 generates a vehicle speed control signal on the basis of the converted control amount and transmits the vehicle speed control signal to the travel motor controller 52. The map selector 74c is configured to, as schematically illustrated in Fig. 10, select a control map 74b for use in accordance with whether the electric mower is in the unmanned autonomous driving mode (that is, unmanned driving) or the manned autonomous driving mode (that is, manned driving). The control map 74b for the manned autonomous driving mode, as a specific example, returns a map output value (which indicates a control gain) of 0.3 in response to a map input value of 100 and a map output value of 1 in response to a map input value of 30. The map output value increases from 0.3 to 1 with a decrease of the map input value from 100 to 30. The map output value is constantly 1 when the map input value is between 30 and 1. The control map 74b for the unmanned autonomous driving mode, as a specific example, constantly returns a map output value of 1 regardless of the map input value. The present embodiment is configured to add a gain to a control amount for determining the vehicle speed for acceleration and deceleration.

The time diagram of Fig. 9 shows how the control amount converter 74 and the vehicle speed controller 59 change the vehicle speed in accordance with a change in the number of revolutions of the mower motor. The time diagram is outlined as follows: An overload on the motor decreases the number of revolutions of the mower motor. In response to the vehicle speed control unit 57 detecting the decrease, the PD controller 72 amplifies the deviation on the basis of the frequency as well. The saturation calculator 73 performs a saturation calculation on the deviation to provide a control amount. A large control amount means that the amount of change is large and that the speed of change is high. The large control amount causes a small gain, which in turn decreases the vehicle speed sharply (see "Deceleration segment" in Fig. 9). The decrease in the vehicle speed decreases the load on the mower motor 43 and thereby increases the number of revolutions of the mower motor back to the target number of revolutions, with the result of both the deviation and the control amount being 0. The map output value, in contrast, returns to 1 not immediately but gradually along a predetermined inclined line (see "Return segment" in Fig. 9). In response to the map output value being 1, the vehicle speed control unit 57 starts to control the vehicle speed on the basis of the respective amounts of operation of the left and right shift levers 17.

### Alternative Embodiments

(1) The respective functional block diagrams of Figs. 4 and 5 are for an illustrative purpose. Particular functional sections (for example, the number-of-revolutions detector 55 and the actual vehicle speed calculator 56) may be outside the control unit 5. Further, the individual functional sections (for example, the vehicle speed control unit 57) may each be divided into two or more subsections or integrated with another functional section.
(2) The embodiment described above is an electric mower as an electric work vehicle. The battery described above may alternatively be mounted in other electric work machines such as electrically operated tractors, electrically operated harvesters, and electrically operated construction machines.

The arrangements disclosed for the above embodiments (including the alternative embodiments; hereinafter the same applies) may each be combined with an arrangement disclosed for another embodiment, as long as such a combination does not cause a contradiction. Further, the embodiments disclosed in the present specification are mere examples. The present invention is not limited to those embodiments, and may be altered as appropriate, as long as such an alteration does not result in a failure to attain an object of the present invention.

### Industrial Applicability

The present invention is applicable to not only mowers but also agricultural harvesters, snow blowers, and the like.

### Reference Signs List

- 1: Vehicle body
- 3: Mower (work device)
- 4: Inverter
- 4A: Travel motor inverter
- 4B: Mower motor inverter
- 5: Control unit
- 9A: Detector device group
- 9B: Equipment group
- 11: Front wheel
- 12: Rear wheel
- 17: Shift lever (vehicle speed setter)
- 30: Mower deck
- 31: Blade
- 41: Left travel motor (travel electric motor)
- 42: Right travel motor (travel electric motor)
- 43: Mower motor (work electric motor)
- 52: Travel motor controller
- 53: Mower motor controller
- 54: Device controller
- 55: Number-of-revolutions detector
- 56: Actual vehicle speed calculator
- 57: Vehicle speed control unit
- 58: Number-of-revolutions change behavior calculator
- 59: Vehicle speed controller

## Claims

1. A work machine configured to perform work while traveling,
the work machine comprising:
a travel electric motor (41, 42);
a drive wheel unit (12) rotatable by the travel electric motor (41, 42);
a work electric motor (43);
a work device (3) rotatable by the work electric motor (43);
a vehicle speed setter (17) for use to set a desired vehicle speed;
a number-of-revolutions detector (55) configured to detect a number of revolutions of the work device (3);
a number-of-revolutions change behavior calculator (58) configured to calculate change behavior of the number of revolutions over time;
a vehicle speed controller (59) configured to generate a vehicle speed control signal based on the desired vehicle speed and the change behavior; and
a travel motor controller (52) configured to drive the travel electric motor (41, 42) based on the vehicle speed control signal.

2. The work machine according to claim 1, further comprising:
an actual vehicle speed calculator (56) configured to calculate an actual vehicle speed of the work machine,
wherein the vehicle speed control signal is based on the desired vehicle speed, the change behavior, and the actual vehicle speed.

3. The work machine according to claim 1 or 2, wherein
the number-of-revolutions change behavior calculator (58) determines sharp change behavior indicative of a first rate of change in the number of revolutions and gentle change behavior indicative of a second rate of change in the number of revolutions which second rate is lower than the first rate, and
the vehicle speed control signal causes the work machine to change a vehicle speed differently for the sharp change behavior and the gentle change behavior.

4. The work machine according to any one of claims 1 to 3, wherein
the number-of-revolutions change behavior calculator (58) determines sharp change behavior indicative of a first rate of change in the number of revolutions and gentle change behavior indicative of a second rate of change in the number of revolutions which second rate is lower than the first rate, and
the vehicle speed control signal causes the work machine to change a vehicle speed at a rate for each of the sharp change behavior and the gentle change behavior independently of each other.

5. The work machine according to any one of claims 1 to 4, wherein
the work machine has an unmanned autonomous driving mode for unmanned work travel,
the number-of-revolutions change behavior calculator (58) determines sharp change behavior indicative of a first rate of change in the number of revolutions and gentle change behavior indicative of a second rate of change in the number of revolutions which second rate is lower than the first rate, and
with the work machine in the unmanned autonomous driving mode, the vehicle speed control signal causes the work machine to change a vehicle speed sharply for the sharp change behavior and gently for the gentle change behavior.

6. The work machine according to any one of claims 1 to 5, wherein
the vehicle speed controller (59) discriminates between an acceleration relation for acceleration and a deceleration relation for deceleration each as a vehicle speed control relation between (i) the desired vehicle speed and the change behavior each as an input parameter and (ii) the vehicle speed control signal as an output parameter.

7. The work machine according to claim 6, wherein
the acceleration relation and the deceleration relation are each adjustable independently of each other.

8. The work machine according to any one of claims 1 to 7, wherein
the work device (3) is a mower (3) including a rotary blade (31).
